# EUROPEAN PATENT APPLICATION

(11) **EP 4 825 727 A1**
(43) Date of publication of application: **21.10.2026**
(21) Application number: 24903522.1
(22) Date of filing: 29.11.2024
(51) Int. Cl.: B64C 27/473, B64C 11/26, B64U 20/65, B64U 30/293

(54) **ROTOR BLADE**

(30) Priority: 15.12.2023 JP 2023211650
(71) Applicant: Toray Industries, Inc., Tokyo 103-8666 (JP)
(72) Inventor: SEIKE, Satoshi, Nagoya-shi, Aichi 455-8502 (JP); YAMANAKA, Yusuke, Nagoya-shi, Aichi 455-8502 (JP); KARAKI, Takuya, Nagoya-shi, Aichi 455-8502 (JP); WAKABAYASHI, Hiroki, Nagoya-shi, Aichi 455-8502 (JP)
(74) Representative: Kador & Partner Part mbB
(86) International application number: PCT/JP2024/042291
(87) International publication number: WO 2025/126864

(57) **Abstract**

An object of the present invention is to provide a rotor blade that can be suitably applied to UAM aerial vehicles and has excellent impact resistance and maintainability. To achieve this object, the rotor blade of the present invention includes at least: a blade body formed into a blade shape; and a member (leading edge protective member) detachably mounted to the blade body and forming a portion of a leading edge of the rotor blade, wherein the leading edge protective member is detachable from the blade body.

## Description

### Technical Field

The present invention relates to a rotor blade, and more particularly to a rotor blade including a leading edge protective member, which can be suitably used for a UAM (Urban Air Mobility) aerial vehicle (so-called "flying car").

### Background Art

The development of UAM aerial vehicles has been advancing to alleviate traffic congestion in urban areas and secure transportation to remote islands or the like. In this process, designing rotor blades for UAM aerial vehicles has become one of the key issues.

There are two types of conventional rotor blades for general aviation aircraft: a high-performance type, certified for aerial vehicles such as Cessna, and an uncertified/low-cost type for drones. However, the field of UAM aerial vehicles is relatively new, and it is considered that rotor blades for UAM aerial vehicles do not fit either type from the viewpoint of cost and reliability. However, since the UAM aerial vehicles pass over urban areas, if the rotor blade is destroyed by a flying object such as a bird and operation becomes difficult, there is a risk of severe harm to the operator as well as to people and structures on the ground. In actual design, in addition to the impact resistance of a leading edge where flying objects are highly likely to collide, improvement in maintainability is considered important.

Conventionally known rotor blades include, for example, those disclosed in Patent Literature 1 and Patent Literature 2. Patent Literature 1 discloses a rotor blade for an unmanned aerial vehicle having a core part including a foam impregnated with a thermosetting resin inside a skin formed by impregnating carbon fibers with a thermosetting resin. Patent Literature 2 discloses a composite blade including an upper side laminate, a lower side laminate, and an internal foaming agent, wherein the composite blade is formed by placing a foaming agent between an upper side portion and a lower side portion of a composite material consisting of reinforcing fibers and a resin, and thermally expanding the foaming agent. Patent Literature 3 discloses a structure in which a protective sheet formed of a rubber layer is secured to a leading edge of a wind turbine blade with an adhesive for impact resistance, tracking resistance, and ozone resistance. Patent Literature 4 discloses a structure in which a metal such as nickel or titanium is adhesively bonded to a leading edge of a blade for helicopter to provide wear resistance.

### Citation List

### Patent Literature

Patent Literature 1: JP 6971840 B
Patent Literature 2: JP 6789887 B
Patent Literature 3: WO 2012/102294
Patent Literature 4: JP H10-502594 A

### Summary of Invention

### Technical Problem

The rotor blades for UAM aerial vehicles in Patent Literature 1 and Patent Literature 2 described above do not disclose a structure for protecting the leading edge. In this regard, Patent Literature 3 and Patent Literature 4 disclose structures for protecting the leading edge, but since they are for wind turbines and helicopter blades, they are fundamentally different in size, application, overall shape, and structure from rotor blades for UAM aerial vehicles, making it difficult to apply them to rotor blades for UAM aerial vehicles. In addition, since the leading edge and the protective layer are adhesively bonded, it takes time and effort to remove them, which poses a problem in maintainability.

An object of the present invention is to provide a rotor blade that can be suitably applied particularly to UAM aerial vehicles, and has excellent impact resistance and maintainability.

### Solution to Problem

In order to solve the problems described above, the present invention employs any one of the following means. That is:
[1] A rotor blade comprising at least: a blade body formed into a blade shape; and a member (leading edge protective member) detachably mounted to the blade body and forming a portion of a leading edge of the rotor blade.
[2] The rotor blade according to [1], wherein the blade body comprises a skin that is a plate-like member formed of a fiber-reinforced composite material and forms an outer surface of the blade, and a shear web supporting the skin.
[3] The rotor blade according to [1] or [2], wherein a mechanism configured to detachably mount the leading edge protective member is either one or both of a screw fastening mechanism and an engagement mechanism.
[4] The rotor blade according to [3], wherein a blade body side of the engagement mechanism is formed of a metal member mounted into the blade body, and the metal member is embedded in the blade body at a depth of 5 mm or more.
[5] The rotor blade according to [3], wherein a blade body side of the engagement mechanism is formed of a fiber-reinforced resin member containing discontinuous fibers and a thermoplastic resin.
[6] The rotor blade according to [4], wherein the metal member on the blade body side of the engagement mechanism has a function of adjusting center of gravity.
[7] The rotor blade according to any one of [1] to [6], wherein the blade body is subjected to offset processing by an amount corresponding to a thickness of the leading edge protective member, at a position where the leading edge protective member is to be mounted.
[8] The rotor blade according to [7], wherein a position where the offset processing is performed is within a range of 30% from a foremost edge of the leading edge toward a trailing edge in an arbitrary cross section perpendicular to a longitudinal direction of the rotor blade (provided that a distance from the foremost edge of the leading edge to a rearmost edge of the trailing edge is 100%).
[9] The rotor blade according to any one of [1] to [8], wherein the leading edge protective member is formed of either one or both of a fiber-reinforced composite material and a metal.
[10] The rotor blade according to any one of [1] to [9], wherein the leading edge protective member is formed of a material whose impact velocity V₅₀ is 120 m/sec or more measured in accordance with ASTM D8101.
[11] The rotor blade according to any one of [1] to [10], wherein the leading edge protective member includes a portion formed of a fiber-reinforced composite material and a portion formed of a metal, and has a portion where the metal is exposed on an outer surface side thereof and a portion where the fiber-reinforced composite material is exposed on a blade body side.
[12] The rotor blade according to [11], wherein an area where the metal is exposed on an outer surface of the leading edge protective member is smaller than the total surface area of the outer surface of the leading edge protective member.
[13] The rotor blade according to any one of [1] to [12], wherein the leading edge protective member is mounted at a position where a ratio (r/R) is 0.4 or more, where r is a distance from a blade root to an end of the leading edge protective member, and R is a blade length of the rotor blade.
[14] The rotor blade according to any one of [3] to [13], wherein a length of engagement by the engagement mechanism is 20% or more and 90% or less, assuming a length of the leading edge protective member in the blade length direction is 100%.

### Advantageous Effects of Invention

According to the present invention, it is possible to provide a rotor blade that can be suitably applied to UAM aerial vehicles, and has excellent impact resistance and maintainability.

### Brief Description of Drawings

Fig. 1 is a schematic top view of a rotor blade according to an embodiment of the present invention.
Fig. 2 is an example of cross-sectional view taken along line A-A' of Fig. 1.
Fig. 3 is another example of cross-sectional view taken along line A-A' of Fig. 1.
Fig. 4 is another example of cross-sectional view taken along line A-A' of Fig. 1.
Fig. 5 is a view illustrating an exemplary arrangement of a leading edge protective member.
Fig. 6 is a view illustrating an arrangement of a shear web.
Fig. 7 is a view illustrating an arrangement of a shear web.
Fig. 8 is a view illustrating an arrangement of a shear web.
Fig. 9 is a cross-sectional view illustrating an example of the leading edge protective member.

### Description of Embodiments

Hereinafter, embodiments of the present invention will be described in detail with reference to the drawings. However, the present invention should not be construed as being limited to these embodiments.

The rotor blade of the present invention is a rotor blade including at least: a blade body formed into a blade shape; and a member (hereinafter referred to as a "leading edge protective member") detachably mounted to the blade body and forming a portion of a leading edge of the rotor blade. That is, the leading edge protective member is detachably mounted to the blade body and forms a portion of a leading edge of the rotor blade. A mechanism configured to detachably mount the leading edge protective member is preferably either one or both of a screw fastening mechanism and an engagement mechanism.

The leading edge protective member may be a single member or a plurality of members. That is, a plurality of members can be mounted to the blade leading edge to protect the blade leading edge. Moreover, in mounting a plurality of members to the blade leading edge, the mechanism configured to detachably mount the leading edge protective member can be independently employed for each of the members. For example, when n members (n is an integer of 2 or more) are used, an example is that n-1 members are mounted by the engagement mechanism, but one member is mounted by the screw fastening mechanism. In such an aspect, a firm mounting with little play is possible.

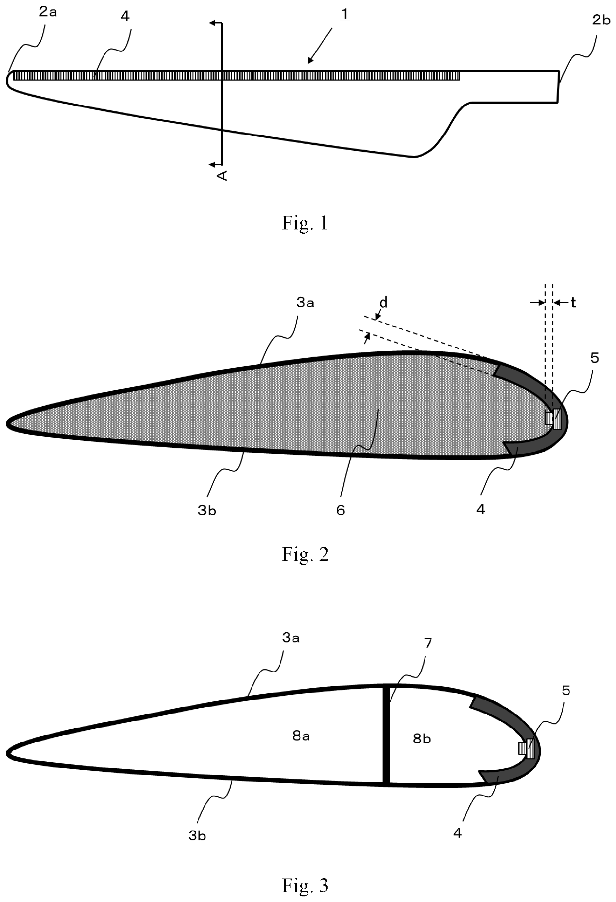

The engagement mechanism includes a male-type member and a female-type member configured to mate with each other. In the present invention, the blade body preferably serves as the male-type member, and the leading edge protective member preferably serves as the female-type member. A part that acts as the female-type member is easily formed with a groove in the blade body or the leading edge protective member, but a metal member formed with a groove for engagement may be provided and embedded in the blade body or the leading edge protective member. A part that acts as the male-type member may be formed during the molding of the blade body or the leading edge protective member, but a component serving function acting as the male-type member is preferably provided and embedded in the blade body or the leading edge protective member (see engagement member 5 in Fig. 2). The portions where the male-type member and the female-type member engage are preferably discontinuous in the longitudinal direction of the leading edge. In addition, assuming a length of the leading edge protective member in the blade length direction is 100%, the total length of the engaging portions is preferably 20% or more and 90% or less, and as a lower limit, more preferably 25% or more, and further preferably 30% or more. If it is less than 20%, the leading edge protective member may not be reliably secured to the blade body. On the other hand, its upper limit is more preferably 85% or less, and further preferably 80% or less. If it exceeds 90%, it may be difficult to dispose the leading edge protective member along the shape of the blade body. The portion of the groove (the part that acts as the male-type member) not involved in the engagement can be used as a groove for a guide.

When the engagement mechanism is employed, in the present invention, the blade body is preferably the male-type member, and a metal component that acts as a functional part of male-type member is preferably embedded in the blade body. The metal component is preferably embedded in the blade body at a depth of 5 mm or more, and an embedded depth t (see Fig. 2) is preferably 6 mm or more, and further preferably 7 mm or more. When the embedded depth is 5 mm or more, the stability of securing the leading edge protective member against the rotation of the blade can be further enhanced. On the other hand, the upper limit of the embedded depth is preferably 20 mm or less, more preferably 18 mm or less, and further preferably 15 mm or less. If it exceeds 20 mm, the weight of the rotor blade may increase, and fuel efficiency may deteriorate.

Alternatively, from the viewpoint of impact resistance and moldability, in the present invention, the blade body is preferably the male-type member, and a male-type member formed of a fiber-reinforced composite material containing discontinuous fibers, i.e., discontinuous reinforcing fibers, and a thermoplastic resin is preferably embedded in the blade body. The reinforcing fibers and the resin will be described later.

In the present invention, when a metal member is used for the screw mechanism or the engagement mechanism, it can be used for adjusting the natural frequency or the center of gravity of the rotor blade. That is, since metal has a large specific gravity, it can be used to match the center of gravity of the rotor blade (where the "rotor blade" here refers to a state in which a plurality of rotor blades are mounted on a rotating shaft; the same applies within this paragraph) with the rotating shaft, or to adjust the natural frequency of the rotor blade so as to prevent a resonance phenomenon from occurring with the rotation of the rotor blade. Regarding the coincidence between the center of gravity of the rotor blade and the rotating shaft, it can be determined whether the metal member is used for that purpose based on the change in the natural frequency when the material of the metal member is replaced with another (for example, a fiber-reinforced composite material).

Fig. 1 illustrates an embodiment of the rotor blade of the present invention used as a propeller blade. Fig. 1 illustrates a top view of a rotor blade 1, wherein the side farther from the rotation center is the blade tip 2a, and the rotation center side is the blade root 2b. A plurality of blades are typically provided around the rotation center.

Based on the A-A' cross section of the rotor blade 1 (that is, a cross section perpendicular to a longitudinal direction of the rotor blade 1), the present invention will be described taking Fig. 2 to Fig. 4 as examples. In the example of Fig. 2, the rotor blade 1 includes a blade body and a leading edge protective member 4, wherein the blade body includes an upper skin 3a forming an upper surface of the blade, a lower skin 3b forming a lower surface of the blade, and a foam core 6 supporting both skins. Furthermore, the blade body and the leading edge protective member are detachably engaged by the engagement member 5. The engagement member 5 is secured to the blade body, and its protruding portion fits into a groove formed in the leading edge protective member 4. The groove formed in the leading edge protective member extends along a blade edge, and the leading edge protective member can be mounted to the blade edge by sliding the leading edge protective member along the leading edge of the blade body. In addition, a portion of the groove of the leading edge protective member may be widened to allow the protruding portion of the engagement member to pass through. With this configuration, it is not necessary to form a groove over the entire portion corresponding to the blade edge. The engagement member may be provided continuously along the blade edge; however, as long as the engagement member can secure the leading edge protective member, it is sufficient to provide the engagement member at a portion of the blade edge. By providing the engagement member 5, the leading edge protective member 4 can be easily fitted or removed for maintenance. The inside of the rotor blade may be hollow or a core material such as a shear web 7 or the foam core 6 may be present, but from the viewpoint of balancing weight reduction and stiffness, a structure provided with a shear web 7 as illustrated in Fig. 3 is desirable.

The screw fastening mechanism includes screw holes and screws, the screw holes are formed in the leading edge protective member and the blade body, and the screws are threadedly engaged with at least the screw holes formed in the blade body. The screw holes preferably penetrate the leading edge protective member, but can be filled after the screws are threadedly engaged. The screws are preferably made of metal, and the screw holes can be provided by embedding a metal member having threaded holes to increase threading strength.

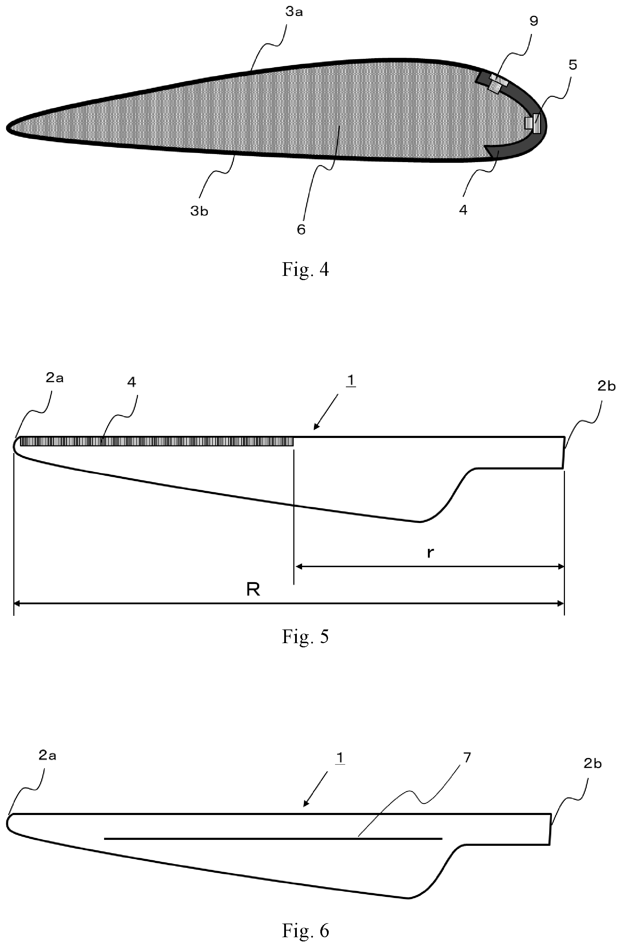

In the example of Fig. 4, the rotor blade 1 includes a blade body and a leading edge protective member 4, wherein the blade body includes an upper skin 3a forming an upper surface of the blade, a lower skin 3b forming a lower surface of the blade, and the foam core 6 supporting both skins. Furthermore, the blade body and the leading edge protective member are detachably engaged by the engagement member 5 and fastened with a screw 9. By fastening with the screw 9, the leading edge protective member 4 can be reliably secured to the blade body. For securing the leading edge protective member 4 by screw fastening, a hole for passing the screw 9 is provided in the leading edge protective member 4, more preferably, a space sufficient to accommodate a screw head is ensured, and a hole for passing the screw 9 is also provided in the blade body. The screw fastening locations and number of screws can be appropriately set as long as the leading edge protective member can be secured.

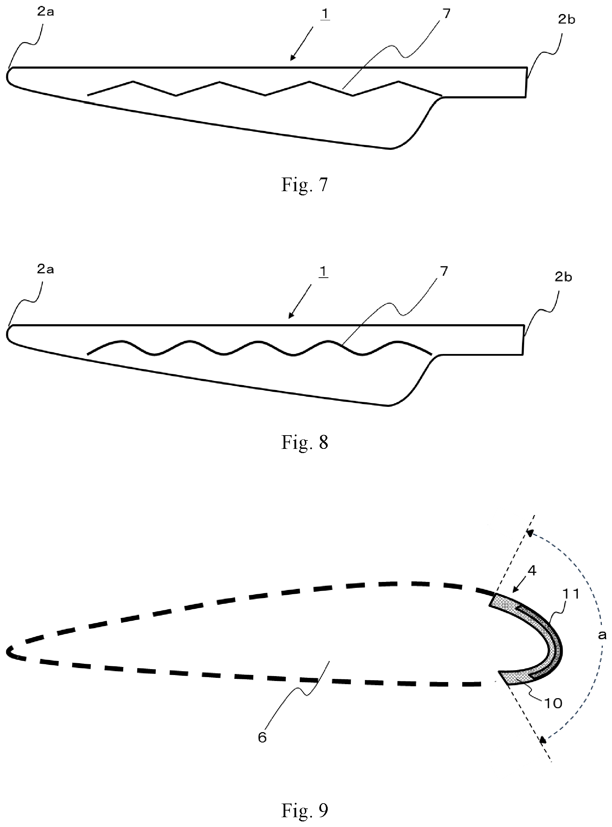

The leading edge protective member used in the present invention is preferably formed of a fiber-reinforced composite material consisting of reinforcing fibers and a resin, a metal, or a combination thereof. As the metal, aluminum, aluminum alloy, iron, magnesium, magnesium alloy, titanium, titanium alloy, zinc, and zinc alloy are preferable from the viewpoint of durability and workability. In particular, as illustrated in Fig. 9, the leading edge protective member preferably includes a portion formed of a fiber-reinforced composite material and a portion formed of a metal, and to have a portion where the metal is exposed on an outer surface side thereof and a portion where the fiber-reinforced composite material is exposed on a blade body side. Further preferably, when the total surface area of an outer surface is S (the area of the section indicated by 'a' in Fig. 9), and the area of the portion where the metal is exposed is Sm, the relationship S > Sm is satisfied, that is, the area where the metal is exposed on the outer surface of the leading edge protective member is preferably smaller than the total surface area of the outer surface of the leading edge protective member. By adjusting the area of the metal exposed on the outer surface of the leading edge, it is easy to adjust the natural frequency and the center of gravity of the rotor blade of the present invention. However, in this case, a metal is preferably provided in a portion corresponding to the foremost edge of the leading edge protective member. The upper limit of the ratio of Sm to S is preferably 0.90 or less, more preferably 0.85 or less, and further preferably 0.80 or less. When the ratio exceeds 0.9, the margin for adjusting the metal weight decreases, and the natural frequency and the center of gravity of the rotor blade may not be set as intended. On the other hand, the lower limit of the ratio of Sm to S is preferably 0.30 or more, more preferably 0.35 or more, and further preferably 0.40 or more. When the ratio is less than 0.30, the exposed area of the metal is small, and the intended effect provided by the metal may not be achieved.

As illustrated in Fig. 9, by making the dimensions of the leading edge protective member the same as the dimensions of the area of the blade body where the leading edge protective member is mounted, the outer surface of the blade body and the outer surface of the leading edge protective member can form a continuous flush surface, thereby reducing the labor for a finishing operation to smooth the surfaces.

The leading edge protective member used in the present invention is preferably formed of a material whose impact velocity V₅₀ is 120 m/sec or more measured in accordance with ASTM D8101, more preferably a material having a V₅₀ of 150 mm/sec or more, and further preferably a material having a V₅₀ of 180 m/sec or more. There is no particular upper limit; however, a velocity of approximately 300 m/sec is sufficient to achieve the protective function. The material thickness during the measurement is set to 2.5 mm ± 0.1 mm, and when a laminated fiber-reinforced composite material is used, the reinforcing fibers are oriented at the same orientation angles as those in the protective member. When the impact velocity V₅₀ is less than 120 m/sec, the leading edge protective member exhibits insufficient impact resistance, and its intended protective performance may not be achieved in the event of a bird strike, potentially resulting in damage to the rotor blade.

Further, when the leading edge protective member used in the present invention is formed of a fiber-reinforced composite material, the difference in orientation angle between the reinforcing fibers of the fiber-reinforced composite materials adjacent in the thickness direction is preferably within 45°, more preferably within 40°, and further preferably within 30°. If the difference in orientation angle between the reinforcing fibers exceeds 45°, desired impact resistance may not be achieved, potentially resulting in damage in the event of a bird strike. The reinforcing fibers and the resin, which are components of the fiber-reinforced composite material, will be described later.

In the rotor blade of the present invention, assuming the distance from the blade root to the end of the leading edge protective member is r, and the blade length of the rotor blade (the length from the rotation center to the blade tip) is R, the leading edge protective member constituting the rotor blade of the present invention is preferably mounted at a position within a range where the ratio (r/R) is 0.4 or more, more preferably 0.5 or more, and further preferably 0.6 or more (see Fig. 5. The rotation center is not illustrated). It goes without saying that the units of r and R are the same (e.g., centimeters). The upper limit is preferably 0.8 or less. If it is less than 0.4, although the weight and size of the leading edge protective member increase, the rotation speed and kinetic energy of the blade under a constant rotational force are low, and thus the effect provided by the protective layer may not be sufficiently achieved.

The blade length of the rotor blade of the present invention is preferably 2 m or less, more preferably 1.7 m or less, and further preferably 1.5 m or less. If it exceeds 2 m, productivity may decrease, potentially resulting in increased costs. On the other hand, the lower limit of the blade length is preferably 0.5 m or more, more preferably 0.6 m or more, and further preferably 0.7 m or more. If it is less than 0.5 m, generating the required lift may result in increased costs.

In the rotor blade of the present invention, the blade body is preferably formed of a fiber-reinforced composite material, and preferably includes a skin that is a plate-like member formed of a fiber-reinforced composite material and forms the outer surface of the blade, and a shear web serving as a support member supporting the skin. The skin preferably includes an upper skin forming an upper surface of the blade and a lower skin forming a lower surface of the blade, and the skin and the shear web are preferably formed of a fiber-reinforced composite material reinforced by continuous reinforcing fibers. The reinforcing fibers and the resin, which are constituent elements of the fiber-reinforced composite material, will be described later.

In order to achieve the aerodynamic performance of the rotor blade of the present invention, it is important that the boundary between the outer surface of the leading edge protective member and the outer surface of the blade body is flush. Therefore, the blade body is preferably subjected to offset processing by an amount corresponding to a thickness of the leading edge protective member, at a position where the leading edge protective member is to be mounted (that is, the outer surface of the blade body is set back toward the center of gravity of the blade by the thickness of the leading edge protective member at the position where the leading edge protective member is mounted; see reference sign d in Fig. 2). The position where the offset processing is performed is preferably within a range of 30% from a foremost edge of the leading edge toward a trailing edge in an arbitrary cross section perpendicular to the longitudinal direction of the rotor blade (provided that a distance from the foremost edge of the leading edge to a rearmost edge of the trailing edge is 100%).

The rotor blade of the present invention preferably has a hollow section in a space sandwiched between the upper skin and the lower skin. By making the hollow section formed inside thereof (see reference signs 8a and 8b in Fig. 3) a hollow section, the entire rotor blade becomes lighter compared to a configuration containing a foaming agent or a foam inside, and accordingly, reduction in rotational driving power (e.g., enabling the downsizing of the driving motor) also becomes possible, which makes it possible to promote energy saving and reduce the manufacturing cost of an airframe. In addition, since the rotor blade is formed of a composite material consisting of a resin and reinforcing fibers, sufficiently high strength and stiffness can be ensured even if the blade thickness (wall thickness of the blade) is kept small, and particularly when carbon fibers are used as the reinforcing fibers, exceptionally high strength and stiffness can be ensured. The volume of the hollow section is preferably 50% or more, based on the total volume of the blade being 100%. On the other hand, at the same time, in order to ensure sufficient mechanical properties, the volume of the hollow section is preferably 80% or less of the total volume of the blade, based on the total volume of the blade being 100%. A thickness of the upper skin and/or the lower skin is not particularly limited as long as required strength and stiffness can be achieved, but from the viewpoint of weight reduction, the upper limit is preferably 10 mm or less, more preferably 8 mm or less, and further preferably 6 mm or less. If it exceeds 10 mm, it may result in increased weight and higher costs. On the other hand, the lower limit of the thickness of the upper skin and/or the lower skin is preferably 0.5 mm or more, more preferably 0.7 mm or more, and further preferably 1 mm or more. If it is less than 0.5 mm, the impact resistance may be insufficient.

Assuming the blade length of the rotor blade of the present invention (length from the rotation center to the blade tip) is R, the hollow ratio in a section from a position corresponding to 20% of the blade length from the blade root to a position corresponding to 80% of the blade length is preferably 50% or more, more preferably 55% or more, and further preferably 60% or more. If it is less than 50%, the weight reduction effect provided by the hollow structure may decrease.

When the blade body includes a skin and a shear web, the shape of the shear web is preferably plate-like, and when it is plate-like, the shape in a top view thereof is not particularly limited and may be linear or curved, but preferably has a bent portion. The top view refers to a direction viewed from the upper skin toward the lower skin as illustrated in Fig. 6, Fig. 7, and Fig. 8. Fig. 7 and Fig. 8 illustrate arrangements of the shear web different from that of Fig. 6, in which the shear web 7 in Fig. 7 has a zigzag shape with angular bent portions, whereas the shear web 7 in Fig. 8 has a wavy shape with curved bent portions. The shape of the shear web in a top view can be designed to an arbitrary shape depending on required stiffness and required strength of the rotor blade.

At any point in a section from the blade root to a position corresponding to 80% of the blade length of the rotor blade of the present invention, the maximum inner dimension of the hollow section in the blade thickness direction in a transverse cross section is preferably 2 mm or more. As for rotor blades for UAM aerial vehicles, the blade length L is often 1 m or less, and it is considered that a maximum of 2 m is sufficient. Therefore, within the blade length, if the maximum inner dimension of the hollow section in the blade thickness direction in the transverse cross section is set to 2 mm or more at any point in the section from the blade root to the position corresponding to 80% of the blade length, a desired weight reduction can be achieved. Preferably, the condition that the maximum inner dimension of the hollow section in the blade thickness direction in a transverse cross section is 2 mm or more is satisfied over as wide a region as possible, and more preferably, over 50% or more, based on the total blade length being 100%.

In addition, one or more shear webs extending in the blade length direction are preferably provided in the hollow section. In this case, in a cross section perpendicular to the blade length direction, two or more regions partitioned by the shear web can be observed. In the example of Fig. 3, the rotor blade 1 includes a shear web 7 extending in the blade length direction, and two regions 8a and 8b can be observed in a cross-sectional view. By providing such a shear web 7, the overall strength and stiffness of the rotor blade can be increased. The number of the shear webs extending in the blade length direction can be set according to the required stiffness and strength of the rotor blade; however, from the viewpoint of moldability and cost, one shear web is preferable.

Further, when evaluated based on a rectangle having the smallest area that circumscribes a projected profile obtained by irradiating parallel light rays perpendicular to the rotation plane of the rotor blade, from the viewpoint of increasing the stiffness of the rotor blade, the shear web preferably extends in the direction of the long side of this rectangle (blade length direction) for 70% or more of the length of the long side. Further, in the direction of the short side of this rectangle (blade width direction), the shear web preferably extends for 30% or more of the length of the short side. In this respect, when a plurality of shear webs are provided, the total extent over which the shear webs extend in the direction of the long side shall be determined based on a see-through view of all the shear webs.

Hereinafter, materials used for the rotor blade of the present invention and a method of manufacturing the rotor blade will be described with reference to examples.

### <Reinforcing Fibers>

The fiber used in the fiber-reinforced composite material forming the rotor blade of the present invention is not limited as long as the fiber provides a reinforcing effect; however, carbon fiber, glass fiber, aramid fiber, or metal fiber is preferable. Among these, carbon fiber is preferably used. Regarding carbon fiber, although not particularly limited, for example, polyacrylonitrile (PAN)-based, pitch-based, or rayon-based carbon fiber can be preferably used from the viewpoint of improving mechanical properties and the weight reduction effect, and these types may be used alone or in combination of two or more. Among these, PAN-based carbon fiber is further preferably used from the viewpoint of the balance between the strength and elastic modulus of the resulting rotor blade.

The single-fiber diameter of the reinforcing fibers is preferably 0.5 µm or more, more preferably 2 µm or more, and further preferably 4 µm or more. Further, the single-fiber diameter of the reinforcing fibers is preferably 20 µm or less, more preferably 15 µm or less, and further preferably 10 µm or less. The strand strength of the reinforcing fibers is preferably 3.0 GPa or more, more preferably 4.0 GPa or more, and further preferably 4.5 GPa or more. The strand elastic modulus of the reinforcing fibers is preferably 200 GPa or more, more preferably 220 GPa or more, and further preferably 240 GPa or more. When the strand strength or the strand elastic modulus of the reinforcing fibers is within its respective range, the mechanical properties of the rotor blade can be improved.

The reinforcing fibers may be continuous fibers (long fibers) or discontinuous fibers (short fibers). Further, the reinforcing fibers may be in the form of a woven fabric or a knitted fabric, such as an orthogonal biaxial woven fabric, a multiaxial woven fabric such as a non-crimp fabric or a braiding material, or a multiaxial knitted structure.

### <Matrix Resin>

The resin used in the fiber-reinforced composite material forming the rotor blade of the present invention is used as a matrix material encapsulating the reinforcing fibers. The matrix resin is not particularly limited, and thermoplastic resin or thermosetting resin can be used. Examples thereof include thermosetting resin such as epoxy resin, unsaturated polyester resin, vinyl ester resin, phenol resin, epoxy acrylate resin, urethane acrylate resin, phenoxy resin, alkyd resin, urethane resin, maleimide resin, and cyanate resin, and thermoplastic resin such as polyamide, polyacetal, polyacrylate, polysulfone, ABS, polyester, acrylic resin, polybutylene terephthalate (PBT), polyethylene terephthalate (PET), polyethylene, polypropylene, polyphenylene sulfide (PPS), polyether ether ketone (PEEK), liquid crystal polymer, polyvinyl chloride, fluororesin such as polytetrafluoroethylene, and silicone. Further, a copolymer or a modified product of a polymer forming these types of resin can also be used. Further, the use of a plurality of types of resin is not precluded.

### <Method of Manufacturing Rotor Blade>

As a manufacturing process of the rotor blade of the present invention, a configuration in which the skin is supported by the foam core will be described as an example. This manufacturing process includes (1) a skin molding process, (2) a foam core molding process, (3) a leading edge protective member molding process, (4) a skin and foam core joining process, and (5) a process of mounting the leading edge protective member to the blade body. These processes can be performed in a single process (for example, simultaneously molding the skin and joining the skin and the foam core); however, they are described separately for convenience. Each process will be described below with specific examples.

### (1) Skin Molding Process

Molding using a sheet-like fiber-reinforced composite material is convenient. In particular, as the sheet-like fiber-reinforced composite material, a thermosetting prepreg or a thermoplastic prepreg, which is known as an intermediate substrate in which the reinforcing fibers are impregnated with resin in advance, can be preferably used. Further, a configuration is also possible in which a resin-free woven fabric, a braiding material, an NCF (non-crimp fabric), or the like is used, and resin impregnation is performed in the molding process. As a molding method, autoclave molding, press molding, transfer molding, AFP (automated fiber placement), stamping molding, or the like can be applied.

In molding, an upper skin shaped after the upper surface of the blade and a lower skin shaped after the lower surface of the blade are obtained by using a mold shaped after the upper surface of the blade and a mold shaped after the lower surface of the blade.

Here, the prepreg is composed of reinforcing fibers and a matrix resin. The lower limit of the volume fraction of the reinforcing fibers contained in the prepreg is preferably 40% or more, more preferably 45% or more, and further preferably 50% or more. If it is less than 40%, the desired mechanical properties may not be achieved when a molded product is formed. Further, the upper limit of the volume fraction is preferably 80% or less, more preferably 75% or less, and further preferably 70% or less. If it exceeds 80%, voids may be included, which may impair the mechanical properties.

The lower limit of the areal weight of the reinforcing fibers contained in the prepreg is preferably 50 g/m² or more, more preferably 100 g/m² or more, and further preferably 150 g/m² or more. If it is less than 50 g/m², holes in which no reinforcing fibers exist may occur in the plane of the prepreg, which may serve as a starting point of fracture. The upper limit of the areal weight of the reinforcing fibers contained in the prepreg is preferably 1000 g/m² or less, more preferably 600 g/m² or less, and further preferably 400 g/m² or less. If it exceeds 1000 g/m², heat cannot be uniformly transferred to the inside during molding, and the desired quality may not be achieved. The areal weight of the reinforcing fibers is measured by cutting out a 10 cm square region from a sheet-like material of the reinforcing fibers, measuring its mass, and dividing the mass by the area. The measurement is performed 10 times at different locations of the sheet-like material of the reinforcing fibers, and the average value thereof is taken as the areal weight of the reinforcing fibers.

For mounting the leading edge protective member by engagement, a portion to serve as the protruding portion is molded integrally with the skin as a part thereof, or a member to serve as the protruding portion is separately prepared and secured to the blade body. For mounting the leading edge protective member by screw fastening, a mounting hole is provided in the blade body.

### (2) Foam Core Molding Process

Although a wood core or the like, for example, can be used as the foam core, a core material made of a resin foam is desirable in order to make the FRP molded product lightweight. The material of the foam is not particularly limited, and polyimide, polyurethane, polystyrene, polyolefin, acrylic resin, or the like can be used. However, a rigid polyurethane foam having an apparent density of 0.025 g/cm³ or more is most preferably used because it is excellent in handleability, physical properties, and cost, and further has a strength sufficient to prevent it from being crushed by the pressure of a matrix resin.

The shape of the core material is obtained by, for example, cutting out or machining a block, or by injecting a mixed and stirred raw foam liquid into an injection foaming mold formed into any desired shape and foaming the liquid inside the mold. When a core material having a complex shape is to be used, the latter method enables efficient production.

### (3) Leading Edge Protective Member Molding Process

Since the leading edge protective member has a complex shape, from the viewpoint of moldability, it is preferable to manufacture the leading edge protective member using a discontinuous fiber-reinforced material such as a material obtained by incising a sheet-like prepreg in which reinforcing fibers are contained in a thermosetting resin (such a prepreg is referred to as "incised prepreg"), or long-fiber pellets or short-fiber pellets in which reinforcing fibers are contained in a thermoplastic resin. The fiber length of the discontinuous fibers is preferably 50 mm or less, more preferably 20 mm or less, and further preferably 5 mm or less. If the fiber length exceeds 50 mm, a resin-rich portion having a low existence probability of fibers may be generated, resulting in a risk of molding defects. On the other hand, the lower limit of the fiber length of the discontinuous fibers is preferably 0.1 mm or more, more preferably 0.5 mm or more, and further preferably 1 mm or more. If the fiber length is less than 0.1 mm, the reinforcing effect provided by the discontinuous fibers is insufficient, resulting in a risk that the portion becomes a starting point of fracture.

Here, the incised prepreg preferably has incisions distributed regularly over the entire in-plane area, and reinforcing fibers contained in the prepreg are cut at locations where the incisions exist. Such regularly distributed incisions can be provided by, for example, the method described in JP 5272418 B.

With the incised prepreg, openings or displacements easily occur at the incisions, thereby improving the extensibility of the prepreg in the reinforcing fiber direction. Further, the flow during compression molding opens the incisions and separates the fiber bundles of the reinforcing fibers from each other, whereby the prepreg exhibits flexibility and has increased flowability. Note that, from the viewpoint of flowability, the incisions are preferably provided over the entire area in the thickness direction of the prepreg.

Further, when staple-fiber pellets or long-fiber pellets are used, they can be molded using a molding method such as injection molding.

### (4) Skin and Foam Core Joining Process

The skin layer molded in process (1) and the foam core molded in process (2) are joined. The joining method is not particularly limited, but welding or adhesion can be applied. A foamable adhesive is particularly preferable; because the adhesive foams and cures due to heat during molding, joining can be performed without gaps.

### (5) Process of Mounting Leading Edge Protective Member to Blade Body

The leading edge protective member molded in process (3) is mounted to the blade body (joined body of the skin and the foam core) formed in process (4). As a mounting method, a detachable method such as screw joining or engagement can be selected. For mounting the leading edge protective member by screw fastening, a hole for passing a screw is provided in the leading edge protective member, a space sufficient to accommodate a screw head is ensured, and a hole for passing a screw is also provided in the blade body. Screw fastening is preferably performed at, for example, three locations: a root side, a tip side, and an intermediate location of the leading edge protective member. On the other hand, for mounting the leading edge protective member by engagement, an engagement member is secured to the blade body, and a protruding portion of the engagement member and a groove provided in the leading edge protective member are engaged with each other. The groove provided in the leading edge protective member may locally have widened portions to pass the protruding portion of the engagement member, and extends along the blade edge; the leading edge protective member is mounted by sliding the leading edge protective member along the blade body. After the mounting, in order to secure the leading edge protective member, the leading edge protective member is preferably fastened with screws at two locations on the root side and the tip side.

Note that in the embodiment in which the skin is supported by the shear web, the shear web is manufactured by the same method as the skin, and in process (4), the shear web and the inner-layer-side surface of the skin are joined.

Although an embodiment of the present invention has been described above, the present invention is not limited to this embodiment at all, and arbitrary modifications can be made within a scope that satisfies the requirements specified in the present invention.

### Industrial Applicability

The rotor blade having the leading edge protective member according to the present invention is particularly suitable as a rotor blade for a UAM aerial vehicle.

### Reference Signs List

- 1: rotor blade
- 2a: blade tip of the rotor blade
- 2b: blade root of the rotor blade
- 3a: upper skin
- 3b: lower skin
- 4: leading edge protective member
- 5: engagement member
- 6: foam core
- 7: shear web
- 8a, 8b: hollow section
- 9: screw
- 10: portion formed of a metal
- 11: portion formed of a fiber-reinforced composite material
- t: embedded depth
- d: offset length

## Claims

1. A rotor blade comprising at least: a blade body formed into a blade shape; and a member (hereinafter referred to as a "leading edge protective member") detachably mounted to the blade body and forming a portion of a leading edge of the rotor blade.

2. The rotor blade according to claim 1, wherein the blade body comprises a skin that is a plate-like member formed of a fiber-reinforced composite material and forms an outer surface of the blade, and a shear web supporting the skin.

3. The rotor blade according to claim 1 or 2, wherein a mechanism configured to detachably mount the leading edge protective member is either one or both of a screw fastening mechanism and an engagement mechanism.

4. The rotor blade according to claim 3, wherein a blade body side of the engagement mechanism is formed of a metal member mounted into the blade body, and the metal member is embedded in the blade body at a depth of 5 mm or more.

5. The rotor blade according to claim 3, wherein a blade body side of the engagement mechanism is formed of a fiber-reinforced resin member containing discontinuous fibers and a thermoplastic resin.

6. The rotor blade according to claim 4, wherein the metal member on the blade body side of the engagement mechanism has a function of adjusting center of gravity.

7. The rotor blade according to claim 3, wherein the blade body is subjected to offset processing by an amount corresponding to a thickness of the leading edge protective member, at a position where the leading edge protective member is to be mounted.

8. The rotor blade according to claim 7, wherein a position where the offset processing is performed is within a range of 30% from a foremost edge of the leading edge toward a trailing edge in an arbitrary cross section perpendicular to a longitudinal direction of the rotor blade (provided that a distance from the foremost edge of the leading edge to a rearmost edge of the trailing edge is 100%).

9. The rotor blade according to claim 1 or 2, wherein the leading edge protective member is formed of either one or both of a fiber-reinforced composite material and a metal.

10. The rotor blade according to claim 1 or 2, wherein the leading edge protective member is formed of a material whose impact velocity V₅₀ is 120 m/sec or more measured in accordance with ASTM D8101.

11. The rotor blade according to claim 9, wherein the leading edge protective member includes a portion formed of a fiber-reinforced composite material and a portion formed of a metal, and has a portion where the metal is exposed on an outer surface side thereof and a portion where the fiber-reinforced composite material is exposed on a blade body side.

12. The rotor blade according to claim 11, wherein an area where the metal is exposed on an outer surface of the leading edge protective member is smaller than the total surface area of the outer surface of the leading edge protective member.

13. The rotor blade according to claim 1 or 2, wherein the leading edge protective member is mounted at a position where a ratio (r/R) is 0.4 or more, where r is a distance from a blade root to an end of the leading edge protective member, and R is a blade length of the rotor blade.

14. The rotor blade according to claim 3, wherein a length of engagement by the engagement mechanism is 20% or more and 90% or less, assuming a length of the leading edge protective member in the blade length direction is 100%.
